# EUROPÄISCHE PATENTANMELDUNG

(11) **EP 1 927 812 A2**
(43) Veröffentlichungstag der Anmeldung: **04.06.2008**
(21) Anmeldenummer: 07016527.9
(22) Anmeldetag: 23.08.2007
(51) Int. Cl.: F24D 19/10

(54) **Verfahren und Vorrichtung zur Beeinflussung einer Heizungsregelung**

(30) Priorität: 22.11.2006 DE 102006054996
(71) Anmelder: Techem Energy Services GmbH, 65760 Eschborn (DE)
(72) Erfinder: Klee, Helmut, 61118 Bad Vilbel (DE); Heisser, Lothar, 55130 Mainz (DE)
(74) Vertreter: KEIL & SCHAAFHAUSEN Patentanwälte

(57) **Zusammenfassung**

Die vorliegende Erfindung bezieht sich auf ein Verfahren oder eine Vorrichtung zur Beeinflussung eines Heizungsreglers (2), an welchen über eine Schnittstelle (4) ein Sensor (5) anschließbar ist und welcher auf Basis eines gemessenen Sensorwertes (R0) eine Heizungsanlage entsprechend einer Regelcharakteristik regelt, wobei die Regelcharakteristik des Heizungsreglers (2) durch Vorgabe eines Korrekturwertes (Rs) beeinflusst wird. Um die vorhandene Schnittstelle (4) des Heizungsreglers (2) zu nutzen, wird der Korrekturwert (Rs) durch eine Simulation des Sensorwertes unter Berücksichtigung des gemessenen Sensorwertes (R0) gebildet.

## Beschreibung

Die Erfindung betrifft ein Verfahren zur Beeinflussung eines Heizungsreglers, an welchen über eine Schnittstelle ein Sensor anschließbar ist und welcher auf Basis eines gemessenen Sensorwertes eine Heizungsanlage, insbesondere die Vorlauftemperatur und/oder den Massenstrom eines Heizmediums in der Heizungsanlage, entsprechend einer vorgegebenen Regelcharakteristik regelt. Dabei wird die Regelcharakteristik des Heizungsreglers durch Vorgabe eines Korrekturwertes beeinflusst. Ferner wird eine entsprechende Vorrichtung beschrieben.

Üblicherweise verfügen Heizungsregler über einen Vorlauftemperaturfühler und/oder über einen Außentemperaturfühler, also über Temperatur-Sensoren, die an den Regler angeschlossen sind. Regler von Heizungsanlagen regeln dann beispielsweise die Vorlauftemperatur der Heizungsanlage in Abhängigkeit von der Außentemperatur sowie ggf. weiterer Größen. Teilweise verfügen derartige Regler über Schnittstellen, um zusätzliche Modifikationen der Heizungskennlinie vornehmen zu können, die beispielsweise vom Energiebedarf abhängt. Bei moderneren Heizungsanlagen sind dazu Systemschnittstellen vorgesehen, wie etwa Spannungsschnittstellen in einem Spannungsbereich von 0V bis 10V, Stromschnittstellen in einem Strombereich von 0mA bis 20mA, KM- und CAN-Busschnittstellen. Als Temperatursensoren werden üblicherweise temperaturabhängige Widerstände, beispielsweise PTC, NTC, Pt1000, Ni500, etc., oder Thermoelemente, beispielsweise Halbleiterfühler, eingesetzt.

Mit Hilfe von über diese Schnittstellen zugeführten Korrekturwerten kann der Regler einer Heizungsanlage sinnvoll gesteuert werden, um die bereitgestellte Wärmemenge der tatsächlichen Wärmeanforderung in dem Gebäude anzupassen. Dabei wird typischer Weise durch eine Beeinflussung oder Modifikation der Ausgangsgröße, die der Sensor liefert, Einfluss auf den Regelvorgang des Reglers genommen. Dies ist beispielsweise der Fall, wenn aufgrund von Nutzerverhalten, Tageszeit, klimatischen Bedingungen oder dergleichen bedarfsgeführt Korrekturen an der häufig durch die Heizungskennlinie vorgegebenen Reglercharakteristik vorgenommen werden.

Eine derartige Optimierung der Heizungsregelung führt zu einer erheblichen Energieeinsparung und gewinnt gerade in Zeiten sich verteuernder Primärenergiequellen, wie Öl und Gas, an zunehmender Bedeutung. Allerdings sind derartige Schnittstellen zur zusätzlichen Modifikation der Heizungskennlinie nicht in allen neuen Heizungsreglern vorhanden. Ältere Heizungsregler im Anlagenbestand verfügen in der Regel über keine derartigen Schnittstellen. In diesem Fall muss, um Primärenergie einzusparen, der Heizungsregler oder die gesamte Heizungsanlage durch ein mit einer derartigen Schnittstelle versehenes System ausgetauscht werden. Dies bedingt zusätzliche Investitionskosten für den Heizungsregler bzw. die Heizungsanlage, Demontage und Entsorgung des alten Gerätes und Montage eines Neugerätes. Aufgrund dieses Aufwands und der damit verbundenen hohen Investitionskosten werden sinnvolle Modernisierungen häufig nicht vorgenommen.

Aufgabe der Erfindung ist es daher, eine Beeinflussung eines Heizungsreglers auch ohne das Vorsehen einer zusätzlichen Systemschnittstelle zu ermöglichen.

Bei dem Verfahren der eingangs genannten Art wird dies mit den Merkmalen des Anspruchs 1 insbesondere dadurch erreicht, dass der insbesondere auf Basis einer von außen vorgebbaren Korrekturstellgröße zu erzeugende Korrekturwert durch eine Simulation des Sensorwertes unter Berücksichtigung des gemessenen Sensorwertes gebildet wird. Dieser simulierte Sensorwert wird dann an die in einem Heizungsregler üblicherweise vorhandene Schnittstelle für einen Vorlauftemperatursensor oder Außentemperatursensor ausgegeben, so dass ohne das Vorsehen einer zusätzlichen Schnittstelle eine Beeinflussung der Kennlinie des Heizungsregler erfolgen kann und der bisher verwendete Sensor des Heizungsreglers, insbesondere ein Vorlauftemperatur- und/oder Außentemperatursensor, als Eingangsgröße für die Heizungsreglung mit verwendet werden kann.

Gemäß einer vorteilhaften und üblichen Ausgestaltung der vorliegenden Erfindung ist der Sensorwert des ohnehin an den Heizungsregler angeschlossenen Sensors ein Widerstandswert, der insbesondere dem Vorlauftemperaturwert und/oder dem Außentemperaturwert entspricht. In diesem Fall kann der Korrekturwert bzw. die Korrektur der Temperaturfühler-Sensorwerte durch Berücksichtigung der ursprünglich gemessenen Widerstandswerte und Simulation eines Korrekturwerts als Widerstandswert vorgenommen werden.

Eine besonders bevorzugte Variante der vorliegenden Erfindung liegt darin, den Korrekturwert mittels eines Netzwerkes von zuschaltbaren Widerständen zu bilden. Dazu kann ein Widerstandssimulator verwendet werden, der entweder anstelle des ursprünglich an dem Heizungsregler vorgesehenen Sensors oder parallel zu dem vorhandenen Sensor an dem Heizungsregler angeschlossen sein. Wenn der Widerstandssimulator anstelle des eigentlich vorgesehenen Sensors an den Heizungsregler angeschlossen ist, wird der Sensor also komplett von dem Heizungsregler getrennt und über ein separates Widerstandsmesswerk betrieben, welches Teil der Widerstandssimulation ist. Im Falle einer parallelen Zuschaltung von schaltbaren Widerständen zu dem Sensor wird der ursprüngliche Sensorwert mittels des Widerstandsmesswerks hochohmig abgegriffen, so dass der eigentliche Messwert durch den Messabgriff kaum beeinflusst wird.

Um das Vorzeichen des aus dem Widerstandsnetzwerks resultierenden Widerstands umkehren zu können, kann dem Widerstandsnetzwerk seriell ein Negativ-impedanz-Converter (NIC), wie er aus der Halbleiter-Schaltungstechnik bekannt ist, nachgeschaltet werden. Durch diese Serienschaltung lässt sich der Widerstandswert auch subtrahieren. Dies ermöglicht mit demselben resultierenden Widerstand sowohl eine Widerstandserhöhung als auch eine Widerstandsverminderung des am Heizungsregler verbleibenden Temperatursensors und ist mit einer vorteilhaften Bauteileinsparung verbunden.

Gemäß einer weiteren Ausführungsform der Erfindung, die auch mit dem vorbeschriebenen Widerstandsnetzwerk kombiniert werden kann, ist es möglich, den Korrekturwert mittels einer Strom-Spannungsquelle und/oder Strom-Spannungssenke zu bilden. Auch kann der Korrekturwert mittels eines Optokopplers mit lichtabhängigem Ausgangswiderstand oder mit Feldeffekttransistorausgang gebildet werden. Im Falle einer Strom- bzw. Spannungsquelle und/oder -senke wird das Widerstandsmesswerk durch ein Spannungsmesswerk ersetzt, das die Spannung in kurzen Abständen misst, um auch übliche gepulste Messverfahren zu unterstützen. Die Simulation des Sensorwertes erfolgt dann durch eine in Serie zu dem an den Heizungsregler angeschlossenen Sensor geschaltete, steuerbare Spannungsquelle.

Gemäß einer bevorzugten Ausführungsform der vorliegenden Erfindung kann zusätzlich zu dem Sensor ein Referenzsensor vorgesehen werden, der beispielsweise mittels eines Referenzmesswerks vermessen wird. Hierdurch ist es möglich, sofern der an den Heizungsregler angeschlossene Sensor ein Vorlauftemperatursensor ist, eine präzise Erfassung der Auswirkung der Stellgröße auf die tatsächliche Vorlauftemperatur zu erfassen. Außerdem ist es mittels eines Referenzsensors möglich, die Kennlinie eines unbekannten Sensors aufzunehmen und für die Heizungsregelung oder die Erzeugung eines Korrekturwertes mit zu verwenden. Sofern der Referenzsensor benachbart zu dem Vorlauftemperatursensor des Heizungsreglers platziert wird und somit die gleiche Temperatur messen kann, ist auch eine präzise Erfassung der Auswirkung der Stellgröße auf die tatsächliche Vorlauftemperatur möglich.

Gemäß einer weiteren Variante der vorliegenden Erfindung kann der Korrekturwert auch durch Änderungen der Bedingungen gebildet werden, die durch den an den Heizungsregler angeschlossenen Sensor detektiert werden. Insbesondere ist es beispielsweise möglich, den an den Heizungsregler angeschlossenen Sensor in eine Temperatur- oder Klimakammer oder einen sonstigen vorzugsweise abgeschlossenen Raum einzubringen, in dem die detektierten Umgebungsgrößen beeinflussbar sind. Dies hat den Vorteil, dass in das elektrische System des Heizungsreglers überhaupt nicht eingegriffen werden muss, sondern eine Widerstandssimulation dadurch erfolgt, dass die von dem Sensor tatsächlich detektierten Größen entsprechend den Korrekturvorgaben angepasst werden.

Die Erfindung bezieht sich gleichfalls auf eine Vorrichtung zur Beeinflussung des Heizungsreglers gemäß den Merkmalen des Anspruchs 8, welche insbesondere zur Durchführung des zuvor beschriebenen Verfahrens geeignet und eingerichtet ist. Die Vorrichtung ist im Zusammenhang mit einem Heizungsregler einsetzbar, welcher mindestens eine Schnittstelle zum Anschließen eines Sensors, insbesondere eines Widerstandssensors zur Temperaturmessung, aufweist. Ferner weist die Vorrichtung ein Messwerk zum Anschließen eines Sensors und einen Sensorwert-Simulator zur Erzeugung eines Korrekturwertes unter Berücksichtigung des gemessenen Sensorwertes auf. Damit ist es mittels der Vorrichtung möglich, einen Korrekturwert durch Simulation eines von dem Heizungsregler interpretierbaren Sensorwertes zu bilden und dabei den ursprünglichen, an den Heizungsregler gemeldeten Sensorwert zu berücksichtigen.

Zur Simulation des Korrekturwertes kann ein Prozessor zur Korrektur des gemessenen Sensorwertes um eine von außen vorgegebene Stellgröße vorgesehen sein. Die von außen vorgegebene Stellgröße kann beispielsweise in einer geeigneten Wärmeadaptionsregelung ermittelt worden sein.

Der eigentliche Sensorwert-Simulator kann alleine und unmittelbar anstelle des ursprünglichen Sensors oder parallel zu dem ursprünglich vorgesehenen Sensor an die Schnittstelle des Heizungsreglers anschließbar sein.

Um eine Beeinflussung der an dem Heizungsregler anliegenden Widerstandswerte durch unterschiedliche Potenzialverhältnisse des Eingangs des Heizungsreglers und des Ausgangs des Widerstandssimulators sowie durch unterschiedliche Kopplung zum Spannungsversorgungspotenzial zu vermeiden, kann der Sensorwert-Simulator über eine Potentialtrennung an den Heizungsregler angeschlossen werden.

Gemäß einer besonders bevorzugten Ausführungsform der Erfindung ist der Sensorwert-Simulator ein Widerstandssimulator, welcher insbesondere ein mit CMOS-Schaltern oder/oder Optokopplern mit lichtabhängigem Widerstand im Ausgang (LDR) oder mit Feldeffekttransistor(FET)-Ausgang gebildetes Widerstandsnetzwerk aufweist.

Ferner kann der Sensorwert-Simulator eine Strom-Spannungsquelle und/oder Strom-Spannungssenke sein. Dies hat den Vorteil, dass für die Messung und Korrektur des Sensorwertes eine einfache Schaltung eingesetzt werden kann.

In einer weiteren Ausgestaltung der erfindungsgemäßen Vorrichtung kann der Sensorwert-Simulator eine Temperaturkammer oder dergleichen geschlossener Raum zur Beeinflussung des an den Heizungsregler angeschlossenen Sensors sein, in dem die von dem Sensor detektierten Bedingungen entsprechend der vorzunehmenden Korrektur simuliert werden.

Erfindungsgemäß kann an die Vorrichtung, beispielsweise an den Prozessor, ein Referenzsensor angeschlossen sein, der die Aufnahme von Kennlinien ermöglicht und die Rückwirkung der Korrektur auf die Stellgröße unmittelbar erfasst.

Weitere Merkmale, Vorteile und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: ein Blockschaltbild einer erfindungsgemäßen Vorrichtung zur Beeinflussung eines Heizungsreglers gemäß einer ersten Ausführungsform;
- Fig. 2: ein Blockschaltbild einer erfindungsgemäßen Vorrichtung zur Beeinflussung eines Heizungsreglers gemäß einer zweiten Ausführungsform;
- Fig. 3: ein Blockschaltbild einer erfindungsgemäßen Vorrichtung zur Beeinflussung eines Heizungsreglers gemäß einer dritten Ausführungsform:
- Fig. 4: ein Blockschaltbild einer erfindungsgemäßen Vorrichtung zur Beeinflussung eines Heizungsreglers gemäß einer vierten Ausführungsform;
- Fig. 5: ein Blockschaltbild einer erfindungsgemäßen Vorrichtung zur Beeinflussung eines Heizungsreglers gemäß einer fünften Ausführungsform;
- Fig. 6: eine Simulationsschaltung zur Spannungskorrektur für eine Vorrichtung gemäß Fig. 5;
- Fig. 7: ein Pulsdiagramm für die Spannungskorrektur gemäß Fig. 5 und 6 und
- Fig. 8: ein Blockschaltbild für eine erfindungsgemäße Vorrichtung zur Beeinflussung eines Heizungsreglers gemäß einer sechsten Ausführungsform.

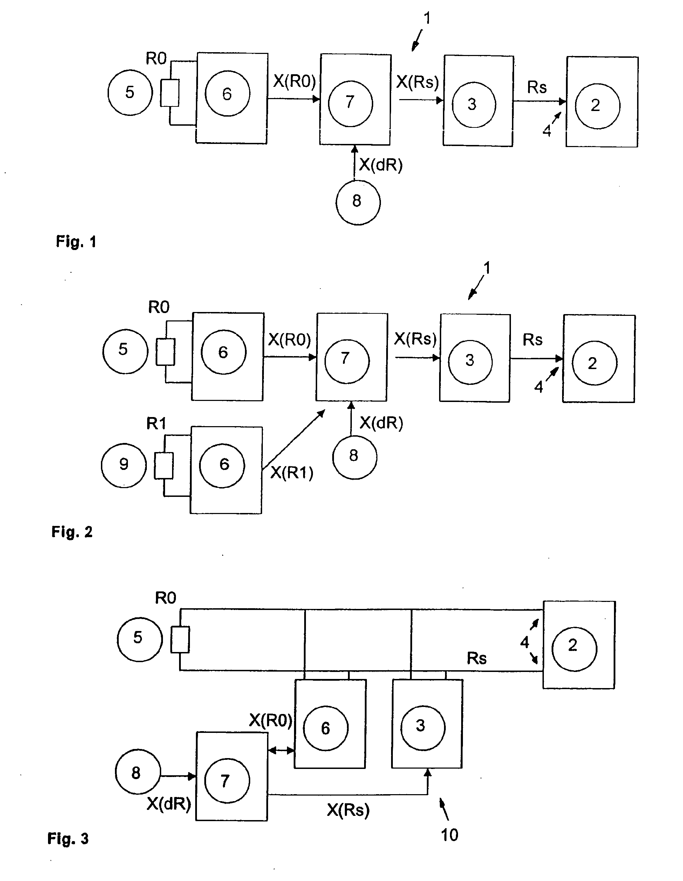

Die in dem Blockschaltbild gemäß Fig. 1 dargestellte Vorrichtung 1 zur Beeinflussung eines Heizungsreglers 2 weist als Sensorwert-Simulator 3 einen Widerstandssimulator auf, der einen simulierten Widerstandswert Rs an den Heizungsregler 2 ausgibt. Dazu ist der Widerstandssimulator 3 an eine Schnittstelle 4 des Heizungsreglers 2 angeschlossen, an welche ein Temperatursensor 5 grundsätzlich anschließbar ist, welcher insbesondere der Erfassung der Außentemperatur oder der Vorlauftemperatur des Heizmediums dient und einen Widerstandswert R0 in Abhängigkeit von der am Messort herrschenden Temperatur (Außentemperatur der Luft oder Vorlauftemperatur des Heizmediums) liefert.

Der Temperatursensor 5 wird bei Anwendung der erfindungsgemäßen Vorrichtung 1 gemäß der ersten Ausführungsform von der Schnittstelle 4 des Heizungsreglers 2 abgetrennt und an die Vorrichtung 1 angeschlossen. Dazu ist in der Vorrichtung 1 ein Widerstandsmesswerk 6 vorgesehen, welches aus dem analogen Widerstandswert R0 eine diesem entsprechende Stellgröße X(R0) bestimmt und an einen Prozessor 7 der Vorrichtung 1 weiterleitet. In dem Prozessor 7 wird ferner eine Korrekturstellgröße X(dR) verarbeitet, welcher von einem Stellgrößenkorrekturmodul 8 erzeugt wird.

Bei dem Stellgrößenkorrekturmodul 8 kann es sich einfacherweise um eine Schnittstelle zum Anschließen beispielsweise einer vorgelagerten Wärmeadaptionsregelung handeln, welche einen Korrekturwert zu der aufgrund der Heizungskennlinie in dem Heizungsregler 2 erzeugten Vorlauftemperatur liefert. Im Rahmen der Erfindung kann das Stellgrößenkorrekturmodul 8 jedoch auch eine vollständige Wärmeleistungsadaptionsregelung oder dergleichen sein, welche die Korrekturstellgröße X(dR) beispielsweise aufgrund von Messwerten innerhalb des Gebäudes selbsttätig ermittelt.

In dem Prozessor 7 der Vorrichtung 1 werden aus den Stellgrößen X(R0) des Sensor-Widerstandswerts und der Korrekturstellgröße X(dR) eine Ausgangsstellgröße X(Rs) des Korrekturwerts Rs ermittelt, welcher in dem Sensorwertsimulator beispielsweise wieder in einen analogen Wert als simulierter Widerstandswert Rs übersetzt und an den Regler 2 ausgegeben wird.

Dabei ist die vorliegende Erfindung nicht auf die dargestellte Aufteilung der einzelnen Verfahrensschritte der Vorrichtung 1 beschränkt. Insbesondere können der Prozessor 7 und der Sensorwert-Simulator 3 in einer Einheit zusammengefasst werden, so dass eine gesonderte Ausgabe der Ausgangsstellgröße X(Rs) entfällt und unmittelbar der simulierte Widerstandswert Rs an den Heizungsregler 2 ausgegeben wird. Der Prozessor 7 kann als Mikroprozessor oder analoges Rechenwerk ausgebildet sein.

Sofern keine Korrekturstellgröße vorgegeben wird, d.h. im Falle X(dR=0), wird als simulierter Widerstandswert Rs der durch den Temperatursensor 5 gemessene Widerstandswert R0 ausgegeben. Der von dem Sensorwert-Simulator 3 erzeugte Widerstandswert Rs entspricht in diesem Fall also dem gemessenen Sensorwiderstandswert R0.

Beispielsweise durch Einsatz der zuvor beschriebenen Vorrichtung kann daher das erfindungsgemäße Verfahren durchgeführt werden, bei dem anstelle eines von einem an den Heizungsregler normalerweise angeschlossenen Sensors ein simuliertes Sensorsignal als Korrekturwert unter Berücksichtigung des gemessenen Sensorwertes gebildet wird, um den Heizungsregler 2 einer nicht dargestellten Heizungsanlage zu beeinflussen und dessen Heizungscharakteristik anzupassen.

In Fig. 2 ist eine Variante der Vorrichtung 1 zur Beeinflussung des Heizungsreglers 2 dargestellt, die einen zu der vorbeschriebenen Vorrichtung 1 im Wesentlichen vergleichbaren Aufbau aufweist und mit denselben Funktionselementen ausgestattet ist. Diese weisen in Fig. 2 dieselben Bezugszeichen auf und werden nachfolgend nicht näher erläutert.

Zusätzlich zu dem ursprünglich an den Heizungsregler 2 angeschlossenen Temperatursensor 5 ist in dieser Variante der Erfindung ein Referenzsensor 9 vorgesehen, welcher einen Referenzsensor-Widerstandswert R1 erzeugt. Dieser wird in einem analog zu dem bereits beschriebenen Widerstandsmesswerk arbeitenden Widerstandsmesswerk 6 in eine Stellgröße X(R1) des Referenzsensor-Widerstandswerts umgewandelt und gemeinsam mit den übrigen Stellgrößen dem Prozessor 7 zugeleitet.

Mit Hilfe des Referenzsensors 9, der örtlich am gleichen Messpunkt wie der Temperatursensor 5 angebracht ist, ist den möglich, den Temperaturwert in dem Widerstandsmesswerk 6 zu bestimmen und auf diese Weise die Kennlinie eines unbekannten Temperatursensors 5 zu ermitteln. Dazu ermittelt der Prozessor 7 aus den Referenzsensor-Widerstandswerten R1 aufgrund der bekannten Temperaturkennlinie den zugehörigen Temperaturwert T, der ins Verhältnis mit dem Sensor-Widerstandswert R0 des Temperatursensors 5 gesetzt wird, dessen Widerstands-Temperatur-Kennlinie nicht bekannt ist. Im Laufe der Zeit kann somit die gesamte R-T-Kennlinie des Temperatursensors aufgenommen und gespeichert werde.

Mit Vorgabe der einzustellenden Korrekturstellgröße X(dR) kann die Widerstands-Simulation in dem Sensorwert-Simulator 3 dann entsprechend angesteuert werden, um dem Heizungsregler 2 den entsprechenden Widerstandskorrekturwert Rs vorzugeben. Falls die Kennlinie des Temperatursensors 5 bekannt ist, kann auf den Referenzsensor 9 dagegen verzichtet werden.

Temperaturabhängige Widerstandssensoren unterscheiden sich im Wesentlichen durch ihren Basiswiderstand (beispielsweise bei 20°C Umgebungstemperatur), die grundsätzliche Temperaturabhängigkeit (NTC, PTC) und die Krümmung der Kennlinie. Um ein Widerstandsmesswerk 6 in optimaler Auflösung an die verwendeten Temperatursensoren 5, 9 anzupassen, kann ein Algorithmus beispielsweise solange den Messfühlerstrom erhöhen, bis der Spannungswert in einer für die Messung hinreichenden Genauigkeit liegt. Das hierfür verwendete Messwerk kann beispielsweise das in Fig. 2 beschriebene Widerstandsmesswerk 6 des Referenzsensors 9 sein.

Bei erstmaliger Inbetriebnahme kann der Messfühlerstrom von Messung zu Messung um diskrete Stufen solange erhöht werden, bis die gemessene Spannung an dem Sensor 5, 9 außerhalb der oberen Grenze des Spannungsmessbereichs liegt. Danach wird mit dem nächst kleineren Messwertfühlerstrom gemessen. Falls bei weiteren Messungen wieder ein Spannungswert außerhalb der oberen Grenze des Spannungsbereichs auftritt, wird der Messfühlerstrom wieder um eine Stufe verkleinert. Falls bei weiteren Messungen ein Spannungswert außerhalb der unteren Grenze des Spannungsmessbereichs auftritt, wird der Messfühlerstrom wieder um eine Stufe vergrößert. Wählt man die Anzahl und den Abstand der Stufen entsprechend der im Regelfall erwarteten Schar von vorkommenden Sensoren 5, 9, dann muss der Messfühlerstrom in der Regel nicht mehr verändert werden, sobald der Sensor mindestens einen hinreichend großen und einen hinreichend kleinen Widerstandswert aufgenommen hat. Es bleibt jedoch möglich, im Laufe der Zeit auftretende Kennliniendriften auszugleichen.

Zur Bestimmung des prinzipiellen Kennlinientyps bei Widerstandssensoren (PTC oder NTC) wird der Sensormessstrom kurzzeitig derart vergrößert, dass er sich geringfügig erwärmt und dadurch der folgende Messwert in Abhängigkeit von dem Kennlinientyp entweder größer oder kleiner ist.

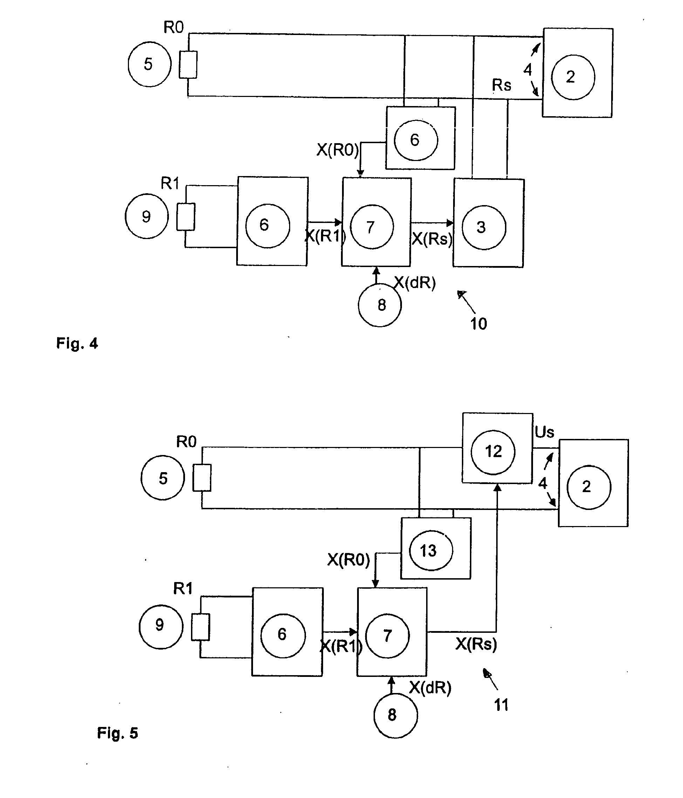

In den Blockschaltbildern gemäß Fig. 3 und 4 werden Varianten der in den Fig. 1 und 2 gezeigten Vorrichtung zur Beeinflussung des Heizungsreglers dargestellt.

In der in Fig. 3 dargestellten Vorrichtung 10 zur Beeinflussung eines Heizungsreglers bleibt der Temperatursensor 5 über die Schnittstelle 4 unmittelbar an den Heizungsregler 2 angeschlossen, wobei die beiden Leitungen des Stromkreises zum Anschluss an die Schnittstelle 4 in Fig. 3 im Gegensatz zu den Fig. 1 und 2 bis zu dem Heizungsregler 2 dargestellt sind. In den Fig. 1 und 2 sind diese Leitungen zu den Heizungsreglern 2 in der Darstellung durch Pfeile ersetzt.

In diesem Fall befindet sich der erfindungsgemäß ausgebildete Widerstandssimulator 3 dann parallel zu dem Sensor 5 an der Schnittstelle 4 des Heizungsreglers 2, um den simulierten Widerstandswert als Korrekturwert Rs auf den Heizungsregler 2 aufzubringen. Der Sensor-Widerstandswert R0 des Temperatursensors 5 wird bei dieser Anordnung durch Aufzeichnung des Strom- und/oder Spannungsverlaufs der Widerstandsmessschaltung des Heizungsreglers 2 oder in den Messlücken bei einer getasteten Widerstandsmessschaltung unter Anwendung eines eigenen Widerstandsmesswerks 6, wie in Fig. 3 dargestellt, ermittelt.

Analog zu den zuvor beschriebenen Ausführungsformen wird durch ein Stellgrößenkorrekturmodul 8 eine Korrekturstellgröße X(dR) vorgegeben und zusammen mit der Stellgröße X(R0) des Sensor-Widerstandswerts R0 an einen Prozessor 7 geliefert, der hieraus eine Ausgangsstellgröße X(Rs) erzeugt und an den Sensorwert-Simulator 3 weiterleitet.

Die in Fig. 4 dargestellte Vorrichtung 10 zur Beeinflussung eines Heizungsreglers 2 weist, ähnlich zu der Darstellung gemäß Fig. 2, zusätzlich einen an den Prozessor 7 angeschlossenen Referenzsensor 9 auf. Im Übrigen arbeitet die in Fig. 4 dargestellte Vorrichtung 10 entsprechend zu der in Fig. 3 dargestellten Vorrichtung zur Beeinflussung eines Heizungsreglers.

Bei dem Sensorwert-Simulator 3 gemäß der vorbeschriebenen Ausführungsformen handelt es sich um einen Widerstandssimulator, der alternativ aus gesteuerten kaskadierten Reihen- und/oder Parallelschaltungen von Widerständen, aus Strom- und/oder Spannungsquellen, aus widerstandsnachbildenden Halbleiterelementen wie Feldeffekttransistoren und/oder aus mit Licht gesteuerten, lichtabhängigen Widerständen (LDR) oder einer Kombination der vorgenannten Bauteile besteht.

Die kaskadierten oder parallel geschalteten Widerstände können beispielsweise durch CMOS-Schalter, Relais und/oder Transistorschalter kaskadiert werden. CMOS-Schalter sind besonders kostengünstig, verschleißfrei und schalten schnell. Dagegen eignen sich Relais nur, wenn wenige, zeitunkritische Schaltvorgänge erforderlich sind, wie beispielsweise die einmalige Wahl des Bereichs des Widerstands-Simulators 3 bei der in Betriebnahme in Abhängigkeit von dem Sensortyp. Somit sind als Widerstands-Simulationsschaltung unter anderem geschaltete Widerstandsnetzwerke, Optokoppler mit lichtabhängigem Widerstandsausgang (LDR), Optokoppler mit Feldeffekttransistor(FET)-Ausgang, sowie Strom- und Spannungsquellen und/oder -senken vorgesehen.

Eine Vorrichtung 11 zur Beeinflussung eines Heizungsreglers 2 mit einer bipolaren Spannungsquelle als Sensorwert-Simulator 12 ist in Fig. 5 dargestellt. In diesem Fall wird der Widerstandswert R0 des Temperatursensors 5 mittels einer aufgeprägten Spannungs- bzw. Stromquelle/-senke beeinflusst. Dies hat den Vorteil, dass für die Messung und Korrektur des Sensorwertes R0 einfache Schaltungen, wie z.B. ein Spannungsmesswerk und eine Spannungsquelle als Stellwerk, eingesetzt werden können. Weiterhin kann im Falle einer Spannungsmessung und -korrektur die Mess- und Korrekturschaltung zu jeder Zeit an dem Temperatursensor 5 verbleiben. Die Qualität der Korrektur lässt sich dadurch kontinuierlich verbessern. Ein möglicher Nachteil besteht jedoch darin, dass nicht jedes Widerstands-Messverfahren, insbesondere kein wechselspannungsbasierendes oder integrierendes Messverfahren, des Heizungsreglers 2 damit beeinflusst werden kann. Im Unterschied zu der bei den Vorrichtungen 1 und 10 beschriebenen Widerstandsmessung und -simulation wird ferner das Widerstandsmesswerk 6 durch ein Spannungsmesswerk 13 ersetzt. Die als Sensorwert-Simulator 12 ausgebildete bipolare Spannungsquelle ersetzt den Widerstandssimulator 3. Im übrigen ist das Verfahren analog einsetzbar, so dass gleich Funktionseinheiten mit denselben Bezugszeichen versehen werden und auf eine ausführliche Beschreibung an dieser Stelle verzichtet werden kann.

Die Spannung über dem Temperatursensor 5 wird in dem Spannungsmesswerk 13 in möglichst kurzen Abständen gemessen, damit auch ein dynamischer Spannungsverlauf des Heizungsreglers 2, wie er beispielsweise bei gepulsten Messverfahren auftritt, erfasst werden kann. Das Pulsen des Messstroms ist bei der Messung von Temperatursensoren 5 weit verbreitet, damit sich der Temperatursensor 5 durch Messung nicht erwärmt und es zu keinen Messfehiern kommt.

Da die Schnittstelle 4 der Messschaltung des Heizungsreglers 2 in der Regel nur während der Messung niederohmig aktiv geschaltet wird und die bipolare Spannungsquelle 12 in Serie dazu liegt, fließt der durch die Spannungsquelle 12 verursachte Messstrom nur zur von dem Heizungsregler 2 bestimmten Messzeit. Daher kann die Spannungsquelle kontinuierlich an der Schaltung verbleiben und braucht nicht geschaltet zu werden. Für den Fall, dass keine Korrektur vorgenommen werden soll, wird die Spannungsquelle auf 0V gesetzt.

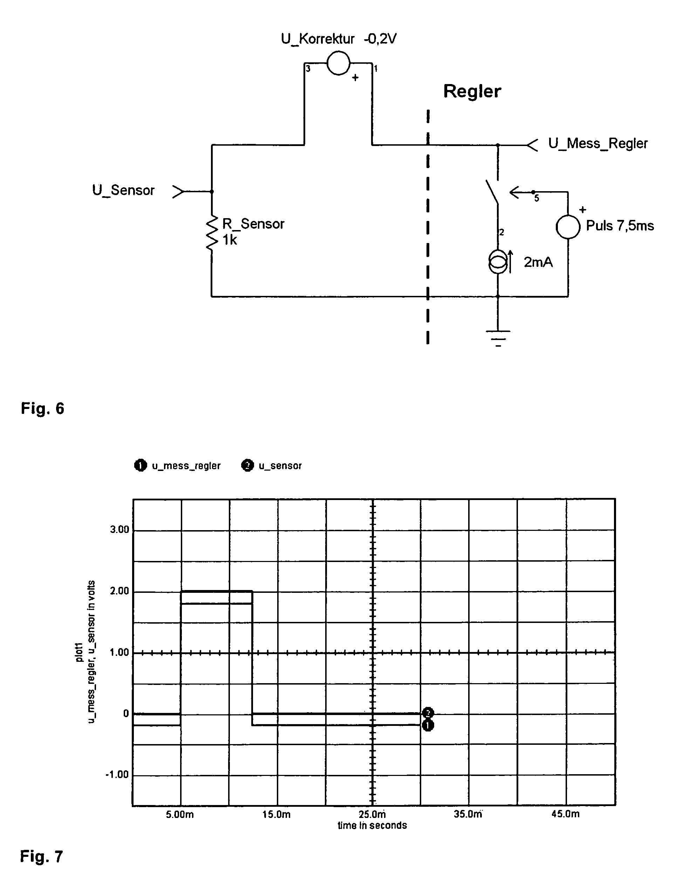

Eine entsprechende Simulationsschaltung zur Spannungskorrektur ist in Fig. 6 dargestellt. Ein durch das Spannungsmesswerk 13 erzeugtes Pulsdiagramm zur Spannungskorrektur mit dem an dem Temperatursensor 5 gemessenen, als U_ Sensor bezeichneten Spannungsverlauf und dem korrigierten, als U_ Messregler bezeichneten Spannungsverlauf gezeigten Spannungskorrektur ist in Fig. 7 dargestellt.

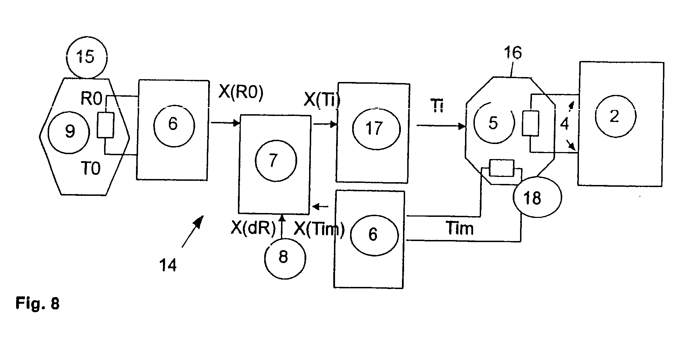

Eine letzte Ausführungsform der erfindungsgemäßen Vorrichtung 14 zur Beeinflussung eines Heizungsreglers 2 ist in Fig. 8 dargestellt. Bei dieser Vorrichtung 14 bleibt der Temperatursensor 5 in herkömmlicher Weise an der Schnittstelle 4 des Heizungsreglers 2 angeschlossen. Der Temperatursensor 5 wird jedoch von seinem ursprünglichen Messort 15 entfernt und in eine Temperaturkammer 16 eingebaut. An dem ursprünglichen Messort 15 wird die eigentliche Temperaturinformation stattdessen durch den Referenzsensor 9 erfasst, der durch das Widerstandsmesswerk 6 vermessen wird. Dieser gibt die Stellgröße des Sensor-Widerstandswerts X(R0) an den Prozessor 7 der Vorrichtung 14 weiter.

Der Prozessor 7 erhält in bereits bekannter Weise von einem Stellgrößenkorrekturmodul 8 ferner die Korrekturstellgröße X(dR) und verändert die Stellgröße des Sensor-Widerstandswertes X(R0) in Form einer Umgebungstemperaturerhöhung oder -senkung X(Ti), welche eine Ausgangsstellgröße darstellt. Mit Hilfe dieser Ausgangsstellgröße X(Ti) wird eine Temperiereinheit 17 angesteuert, um die durch den Sensor 5 in der Temperaturkammer 16 gemessene Temperatur Ti entsprechend der Ausgangsstellgröße X(Ti) einzustellen. Die im Kammerinneren herrschende Temperatur Ti wird durch einen Kammertemperatursensor 18 mit einem entsprechenden Widerstandsmesswerk 6 gemessen und dem Prozessor 7 der Vorrichtung 14 zugeführt.

Vorteil dieser Vorrichtung 14 ist es, dass kein elektrischer Eingriff in die Kombination aus dem Temperatursensor 5 und dem Heizungsregler 2 erfolgen muss. Damit die Temperiereinheit 17 die Temperatur Ti in der Temperaturkammer 16 regeln kann, ist der Kammertemperatursensor 18 erforderlich, der den gemessenen Wert der Temperatur Tim in der Temperaturkammer 16 ermittelt und dem Prozessor 7 mitteilt.

Zur Temperierung kann die Temperiereinheit 17 beispielsweise ein Peltierelement nutzen, das verschleißfrei durch Stromumpolung stetig von einem Heiz- in einen Kühlbetrieb umgeschaltet werden kann. Dabei hat eine pulsweitenmodulierte Ansteuerung gegenüber einer analogen und stetigen Messwertansteuerung den Vorteil eines geringeren Hardwareaufwands, wobei der Prozessor 7 die Temperatur Ti in der Temperaturkammer 16 entsprechend der aus den Stellgrößen X(R0) und X(dR) erzeugten Temperaturausgangsstellgröße X(Ti) erzeugen kann.

Als Temperiereinheit 17 kann anstelle des kombinierten Heiz- und Kühlelements in Form eines Peltierelements beispielsweise auch ein reines Heizelement in Form einer elektrisch betriebenen Heizmatte oder ein reines Kühlelement, beispielsweise basierend auf Verdunstungskälte, mit einem Kompressor wie bei einem Kühlschrank in Frage kommen.

In der Regel soll dem Heizungsregler 2 eine größere Vorlauftemperatur als am Referenz-Temperatursensor 9 gemessen oder eine größere Außentemperatur, als am Referenz-Temperatursensor 9 gemessen, vorgegeben werden, um die Heizleistung zu drosseln. In Anwendungen, bei denen die Temperatur außerhalb der Temperaturkammer 16 kleiner ist als an dem die tatsächliche Temperatur messenden Sensor 9, kommt ein reines Heizelement als preiswerteste Lösung für die Temperiereinheit 17 in Frage. Die Abkühlung kann in einem solchen Fall langsam durch Temperaturangleichung an die Umgebung erfolgen. Einfluss hat hier auch der Grad der Isolierung der Temperaturkammer 16, der entsprechend dimensioniert werden kann. Die Anwendung eines reinen Kühlelements ist für den vorbeschriebenen Zweck nicht sinnvoll.

Ein Peltierelement hat dagegen den Vorteil, dass die Temperatur sowohl erhöht als auch unter die Temperatur außerhalb der Temperaturkammer 16 abgesenkt werden kann. Außerdem erfolgen sowohl die Aufheizung als auch die Abkühlung aktiv und können daher schneller erfolgen als bei einem passiven Temperaturausgleich durch Abkühlung. Die Isolation der Temperaturkammer kann entsprechend wirkungsvoll so gewählt werden, dass die erforderliche Energie zum Halten der Temperatur in der Temperaturkammer vermindert wird.

Die Außentemperatur kann sowohl höhere als auch niedrigere Temperaturwerte als die des Heizungsraums annehmen.

Die Heiz- und/oder Kühlelemente können stetig mit einer Ansteuergröße X(Ti), die analoge oder diskrete Wertstufungen annehmen können, oder pulsweitenmoduliert angesteuert werden können. Letzteres hat den Vorteil, dass für die Realisierung der Temperiereinheit 17 im einfachsten Falle elektrische Schalter, beispielsweise in Form von Relais oder Transistoren, verwendet werden können. Bei der Ansteuerung mit verschiedenen Wertstufen wäre ein Digital-Analog-Wandler erforderlich.

Bevorzugte Varianten der vorliegenden Erfindung entsprechen den Ausführungsformen gemäß Fig. 1 bis 4, bei denen Widerstandwerte des Sensors gemessen und mit Korrektur über ein Widerstandsnetzwerk aus parallel zuschaltbaren Widerständen an den Heizungsregler 2 ausgegeben werden. Im Falle des Vorlauftemperatursensors wird ein Referenzsensor am gleichen Ort platziert, der den Temperaturwert ermittelt. Diese separate Messung der Vorlauftemperatur durch den Referenzsensor 9 ermöglicht die präzise Erfassung der Auswirkungen der Stellgröße. Im Falle eines Außentemperatursensors wird der Widerstand gemessen und ohne Korrektur an den Heizungsregler weitergeleitet. Dadurch ist der Widerstandswert des Sensors bekannt.

Als Schalter in dem Widerstandsnetzwerk können vorzugsweise kostengünstige, verschleißfreie und schnelle CMOS-Schalter eingesetzt werden.

Da praktisch jeder Heizungsregler 2 über einen Vorlauftemperaturfühler und üblicherweise zusätzlich über einen Außentemperaturfühler als Sensoren verfügt, kann mit Hilfe der vorliegenden Erfindung auf einen Reglertausch verzichtet werden, da die vorhandenen Schnittstellen 4 verwendet werden können, um die Reglercharakteristik des Heizungsreglers 2 zu beeinflussen. Der Typ der mit dem Heizungsregler 2 verwendeten Temperatursensoren muss zudem nicht bekannt sein.

Vorteil der bevorzugten Variante ist eine preisgünstige Realisierung, wobei durch eine Trennung zwischen Vermessung der Sensoren und Simulation ferner eine saubere galvanische Trennung ermöglicht wird und das Messverfahren des Messwerks unabhängig von dem Messverfahren des Heizungsreglers ist.

### Bezugszeichenliste:

- 1: Vorrichtung zur Beeinflussung eines Heizungsreglers
- 2: Heizungsregler
- 3: Sensorwert-Simulator, Widerstandssimulator
- 4: Schnittstelle
- 5: Temperatursensor
- 6: Widerstandsmesswerk
- 7: Prozessor
- 8: Stellgrößenkorrekturmodul
- 9: Referenzsensor
- 10: Vorrichtung zur Beeinflussung eines Heizungsreglers
- 11: Vorrichtung zur Beeinflussung eines Heizungsreglers
- 12: Sensorwert-Simulator, bipolare Spannungsquelle
- 13: Spannungsmesswerk
- 14: Vorrichtung zur Beeinflussung eines Heizungsreglers
- 15: ursprünglicher Messort
- 16: Sensorwert-Simulator, Temperaturkammer
- 17: Temperiereinheit
- 18: Kammertemperatursensor

- R0: Sensor-Widerstandswert
- R1: Referenzsensor-Widerstandswert
- Rs: simulierter Widerstandswert, Korrekturwert
- Us: Spannungssimulations-Korrekturwert

- X(R0): Stellgröße des Sensor-Widerstandswerts
- X(R1): Stellgröße des Referenzsensor-Widerstandswerts
- X(dR): Korrekturstellgröße
- X(Ti): Ausgangsstellgröße (Temperatur)
- X(Rs): Ausgangsstellgröße (Widerstand)

- T0: gemessene Temperatur am ursprünglichen Messort
- Ti: Solltemperatur in der Temperaturkammer
- Tim: gemessene Temperatur in der Temperaturkammer

## Patentansprüche

1. Verfahren zur Beeinflussung eines Heizungsreglers (2), an welchen über eine Schnittstelle (4) ein Sensor (5) anschließbar ist und welcher auf Basis eines gemessenen Sensorwerts (R0) eine Heizungsanlage entsprechend einer Regelcharakteristik regelt, wobei die Regelcharakteristik des Heizungsreglers (2) durch Vorgabe eines Korrekturwertes (Rs) beeinflusst wird, **dadurch gekennzeichnet, dass** der Korrekturwert (Rs) durch eine Simulation des Sensorwertes unter Berücksichtigung des gemessenen Sensorwertes (R0) gebildet wird.

2. Verfahren nach Anspruch 1, **dadurch gekennzeichnet, dass** der Sensorwert (R0) ein Widerstandswert ist.

3. Verfahren nach Anspruch 2, **dadurch gekennzeichnet, dass** der Korrekturwert (Rs) mittels eines Netzwerkes von zuschaltbaren Widerständen gebildet wird.

4. Verfahren nach Anspruch 3, **dadurch gekennzeichnet, dass** dem Widerstandsnetzwerk seriell ein Negativ-Impedance-Converter nachgeschaltet ist.

5. Verfahren nach Anspruch 1 oder 2, **dadurch gekennzeichnet, dass** der Korrekturwert (Rs) mittels einer Strom-/Spannungsquelle und/oder Strom-/Spannungssenke (12) und/oder mittels eines Optokopplers mit lichtabhängigem Ausgangswiderstand oder mit Feldtransistorausgang gebildet wird.

6. Verfahren nach einem der vorhergehenden Ansprüche, **dadurch gekennzeichnet, dass** zusätzlich zu dem Sensor (5) ein Referenzsensor (9) vorgesehen wird.

7. Verfahren nach Anspruch 1 oder 2, **dadurch gekennzeichnet, dass** der Korrekturwert (Rs) durch Änderung der Bedingungen gebildet wird, die durch den an den Heizungsregler (2) angeschlossenen Sensor (5) detektiert werden.

8. Vorrichtung zur Beeinflussung eines Heizungsreglers (2), welcher mindestens eine Schnittstelle (4) zum Anschließen eines Sensors (5) aufweist, mit einem Messwerk (6) zum Anschließen des Sensors, **gekennzeichnet durch** einen Sensorwert-Simulator (3, 12, 16) zur Erzeugung eines Korrekturwerts (Rs) unter Berücksichtigung des gemessenen Sensorwertes (R0).

9. Vorrichtung nach Anspruch 8, **dadurch gekennzeichnet, dass** ein Prozessor (7) zur Korrektur des gemessenen Sensorwerts (R0) um eine Stellgröße (X(dR)) vorgesehen ist.

10. Vorrichtung nach Anspruch 8 oder 9, **dadurch gekennzeichnet, dass** der Sensorwert-Simulator (3, 12) unmittelbar oder parallel zu dem Sensor (5) an die Schnittstelle (4) des Heizungsreglers (2) anschließbar ist.

11. Vorrichtung nach einem der Ansprüche 8 bis 10, **dadurch gekennzeichnet, dass** Sensorwert-Simulator (3, 12) über eine Potentialtrennung an den Heizungsregler (2) angeschlossen ist.

12. Vorrichtung nach einem der Ansprüche 8 bis 11, **dadurch gekennzeichnet, dass** der Sensorwert-Simulator (3) ein Widerstandssimulator ist.

13. Vorrichtung nach einem der Ansprüche 8 bis 11, **dadurch gekennzeichnet, dass** der Sensorwert-Simulator (12) eine Strom-/Spannungsquelle und/oder Strom-/Spannungssenke ist.

14. Vorrichtung nach einem der Ansprüche 8 oder 9, **dadurch gekennzeichnet, dass** der Sensorwert-Simulator (16) eine Temperaturkammer zur Beeinflussung des an den Heizungsregler (2) angeschlossenen Sensors (5) ist.

15. Vorrichtung nach einem der Ansprüche 8 bis 14, **dadurch gekennzeichnet, dass** ein an die Vorrichtung angeschlossener Referenzsensor (9) vorgesehen ist.
